# FASCICULE DE BREVET EUROPEEN

(11) **EP 2 772 117 B1**
(45) Date de publication et mention de la délivrance du brevet: **30.08.2017**
(21) Numéro de dépôt: 12761961.7
(22) Date de dépôt: 17.09.2012
(51) Int. Cl.: H05B 3/86, B60S 1/04, B32B 17/10

(54) **PARE-BRISE CHAUFFANT**
BEHEIZTE WINDSCHUTZSCHEIBE
HEATED WINDSHIELD

(30) Priorité: 06.10.2011 BE 201100583
(43) Date de publication de la demande: 03.09.2014
(73) Titulaire: AGC Glass Europe, 1348 Louvain-la-Neuve (BE)
(72) Inventeur: MASSCHELEIN, Peter, B-6040 Jumet (BE)
(74) Mandataire: Le Vaguerèse, Sylvain Jacques
(86) Numéro de dépôt international: PCT/EP2012/068192
(87) Numéro de publication internationale: WO 2013/050233

(56) Documents cités:
- WO-A1-2004/028212
- WO-A1-2011/141487
- WO-A2-2011/023974
- DE-A1-102007 008 833

## Description

L'invention concerne les pare-brise qui comportent un système de couches minces conducteur de l'électricité.

Des pare-brise de ce type sont ceux qui initialement ont été développés pour conférer des propriétés de filtre des rayons infrarouges. Les systèmes dans ce cas comportent une ou plusieurs couches métalliques essentiellement à base d'argent associées à des couches diélectriques qui, d'une part protègent les couches métalliques, et d'autre part, corrigent les effets de ces couches sur le spectre transmis et surtout réfléchi, pour que ceux-ci soient de couleur aussi "neutre" que possible.

Les systèmes de couches conducteurs de l'électricité sont aussi proposés pour chauffer le pare-brise dans le but de le désembuer ou le dégivrer. Dans cette application une difficulté bien reconnue est la nécessité de parvenir à des couches dont la résistance est suffisamment faible pour permettre de disposer d'une puissance appropriée. La puissance développée est limitée par la tension disponible sur le véhicule, en général 12-14v, d'une part, et d'autre part en raison de la nécessité de maintenir l'épaisseur de la ou des couches métalliques telle que la transmission lumineuse dans le domaine des longueurs d'onde du visible reste suffisante pour satisfaire aux exigences réglementaires dans ce domaine, 70 ou 75% selon les pays.

L'obtention des puissances requises pour un dégivrage dans des conditions de rapidité suffisantes, se trouve souvent à la limite des possibilités techniques, en particulier en raison des dimensions croissantes des pare-brise modernes. Les constructeurs automobiles demandent maintenant de disposer de pare-brise pour lesquels la zone de repos des essuie-glaces puisse être chauffée de manière plus intense que le reste du pare-brise. Le but est de faire en sorte que, même pris dans le givre, les essuie-glaces soit rapidement libérés pour contribuer à l'essuyage du reste du pare-brise et hâter l'élimination complète du givre.

Le document DE102007008833A1 décrit par exemple un dispositif comprenant un vitrage équipé d'une couche conductrice chauffante et d'une zone de repos des essuie-glaces chauffée au moyen d'un fil chauffant constitué de sections droites reliées par des boucles, et situé dans une zone dépourvue de couche chauffante.

La nécessité de disposer sur la surface du pare-brise d'une zone de puissance par unité de surface plus élevée a conduit à différentes solutions. Deux types principaux de systèmes sont proposés. Les premiers utilisent le même système de couches qui chauffe l'ensemble du pare-brise, et délimitent des zones différentes par l'emplacement des conducteurs d'alimentation, dits "busbars". Plus les busbars sont proches les uns des autres de part et d'autre de la zone à chauffer, plus la résistance est faible et plus la puissance par unité de surface peut être élevée. Dans la zone de repos des essuie-glaces, qui est nécessairement de dimensions limitées, les busbars peuvent être très proches et la puissance par unité de surface peut donc être relativement élevée. Cette solution intéressante soulève des questions concernant la présence de multiples busbars sur le pare-brise, leur agencement doit tenir compte notamment de ce qu'ils doivent être masqués à la vue de l'observateur extérieur au véhicule.

Un autre type de moyens de chauffage consiste en l'utilisation d'un réseau de fils chauffants à l'emplacement de repos des essuie-glaces. Le choix des fils chauffants permet sans difficulté d'atteindre les puissances nécessaires en choisissant le matériau de ces fils qui n'ont pas la contrainte de la transparence du système de couches chauffant le reste du pare-brise.

Il est notamment connu du document DE102007008833A1 un dispositif comprenant un vitrage équipé d'une couche conductrice chauffante et d'une zone de repos des essuie-glaces chauffée au moyen d'un fil chauffant constitué de sections droites reliées par des boucles, et situé dans une zone dépourvue de couche chauffante.

L'invention concerne ce deuxième type d'application. La mise en oeuvre simultanée de couches conductrices et de fils a pour conséquence la nécessité d'isoler les deux dispositifs. Une disposition simple consiste à disposer les deux moyens sans que ceux-ci soient en contact. Les couches chauffantes sont le plus souvent en position 3 dans un pare-brise feuilleté, autrement dit sur la face de la feuille de verre tournée vers l'intérieur du véhicule et au contact de l'intercalaire thermoplastique qui unit les deux feuilles de verre. Une possibilité dans ce cas est de disposer le réseau de fils chauffants sur l'autre face de l'intercalaire, au contact de la feuille de verre tournée vers l'extérieur. L'intercalaire étant de matériau non conducteur les deux moyens de chauffage se trouvent nécessairement isolés l'un de l'autre. Ce mode impose néanmoins une disposition délicate pour le raccordement des conducteurs aux sources d'alimentation, en particulier le passage des conducteurs sur la face opposée de l'intercalaire.

La disposition des fils chauffants au contact du système de couches conducteur nécessite la mise en oeuvre d'autres moyens. Pour isoler les fils chauffants lorsque ceux-ci sont des fils métalliques une possibilité est d'utiliser des fils revêtus de vernis isolants. Dans leur mise en oeuvre les fils supportent cependant des déformations susceptibles de rompre la continuité de l'isolation. En particulier l'incurvation localement forte des fils peut amener le décollement de l'isolant recouvrant le fil, et un risque de court-circuit avec le système de couches.

Pour éviter le contact des fils chauffants avec une couche appliquée sur la même face de la feuille de verre il est possible de limiter l'application du système de couches de telle sorte que la zone de repos des essuie-glaces ne soit pas revêtue. L'absence de la couche conductrice dans cette zone est obtenue soit par masquage au moment de la formation du système de couches, soit par élimination locale après que la couche ait revêtu l'ensemble de la feuille. Un enlèvement de ce type est souvent réalisé sur les bords des feuilles pour prévenir l'altération qui peut se produire au contact de l'atmosphère. Ce type d'élimination peut s'opérer notamment par un traitement au laser. Le bon réglage des conditions permet l'élimination des couches sans altérer la feuille de verre qui en est revêtue.

En pratique ce dernier mode permettant d'isoler le système de couches conducteur des fils chauffants la zone de repos des essuie-glaces peut poser un problème de qualité optique au-delà de la question de l'apparence lié à l'absence locale de la couche. La différence visible entre la zone dans laquelle la couche est absente et le reste du pare-brise est en règle générale sans importance dans la mesure où elle est masquée par un revêtement d'émail et pour partie au moins sous le capot du véhicule.

Le problème de qualité optique est lié au mode production des pare-brise. Les couches sont appliquées par des techniques de pulvérisation cathodique sous vide. L'application est nécessairement conduite sur des feuilles de verre planes. Il en est de même de l'enlèvement local des couches lorsque la formation de la zone non-revêtue ne résulte pas d'un masquage au moment du dépôt. Pratiquement tous les pare-brise modernes sont incurvés. L'opération de bombage qui conduit de la feuille plane à la feuille incurvée passe nécessairement par un traitement thermique. Les opérations de bombage comprennent le passage de la feuille dans un four et l'élévation de température jusqu'au ramollissement du verre. Le chauffage de la feuille de verre dans le four est principalement réalisé par rayonnement. La présence des couches conductrices a pour effet de réfléchir une partie de ce rayonnement et de modifier localement l'échauffement de la feuille. Ces différences de températures ont des incidences sur la mise en forme de la feuille et l'apparition de défauts optiques.

L'invention a pour but de remédier aux difficultés énoncées ci-dessus. Ceci est atteint par des pare-brise chauffants comportant simultanément un système de couches et un réseau chauffant pour la zone de repos des essuie-glaces, les deux étant positionnés au contact de la face de la même feuille de verre. Les pare-brise selon l'invention sont tels que définis dans la revendication 1.

Pour la mise en oeuvre de l'invention les fils et la couche restent en contact électrique. Ils ne sont pas isolés l'un de l'autre, mais ce contact ne conduit pas à court-circuiter le passage du courant dans les fils. Pour cela, les fils sont en contact seulement avec des parties de la couche délimitées de telle sorte que le courant soit nécessairement conduit préférentiellement par les fils qui offrent une résistance moindre que les parties de la couche avec lesquelles le fil se trouve en contact.

L'isolation "de fait" qui résulte du compartimentage du système de couches conducteur ne nécessite que l'absence de ces couches sur une faible portion de la surface correspondant à la zone de repos des essuie-glaces. Dans cette configuration les feuilles de verre soumises aux opérations de bombage se comportent pratiquement de la même manière que si le système de couches était appliqué uniformément sur la surface correspondante. La présence de lignes non revêtues n'altère pas de manière significative le comportement de la feuille à l'absorption du rayonnement dans le four de bombage. Autrement la disposition de la zone de repos des essuie-glaces pour recevoir le réseau de fils chauffants selon l'invention, n'occasionne pas de défauts optiques.

Pour éviter l'incidence l'absence de la couche selon des lignes prévue selon l'invention sur le comportement au formage de la feuille la proportion de la surface concernée doit être relativement faible. Par rapport à l'ensemble de la surface sur laquelle s'étendent les fils de chauffage, la proportion de de surface sur laquelle le système de couches est enlevé ne dépasse pas 20% et avantageusement ne dépasse pas 10%. Cette proportion peut être aussi faible que 5% ou moins.

La surface de couches qui se trouve retirée dans la mise en oeuvre de l'invention dépend en partie du mode de formation des lignes. Deux modes sont essentiellement envisagés. Dans le premier il s'agit de constituer ces lignes par le masquage correspondant de la feuille de verre au moment de l'application du système de couches. Le mode d'application le plus usuel, même s'il n'est pas exclusif, est le dépôt des couches par pulvérisation cathodique sous vide. Le positionnement sur la feuille de verre du masque présentant un dessin approprié, laisse la feuille de verre dépourvue de couches derrière le masque.

Dans la formation des lignes par masquage, la largeur des lignes qui est tributaire du masque, reste relativement importante par rapport à la fonction de ces lignes qui est de rompre la conductivité de la couche conductrice. Même par masquage en pratique les lignes sont aussi étroites que possible et ne présentent pas une largeur de plus de 0,5mm.

Pour réduire encore la largeur des lignes sans couches, il est préférable de procéder à leur formation par ablation à partir d'une feuille dont la surface traitée est initialement uniformément revêtue. Une telle ablation est faite avantageusement par une technique utilisant de manière connue un faisceau laser. Dans une telle opération la largeur des lignes peut être aussi faible que le permet l'obtention de la rupture de la conduction de la couche. Dans les conditions habituelles les lignes obtenues peuvent être d'une largeur aussi petite que 0,1mm ou moins.

En dehors de la largeur des lignes dont il est question ci-dessus, la proportion de la couche enlevée est fonction de leur nombre par unité de surface. Comme il est précisé à propos des exemples donnés et illustrés, le nombre de lignes, ou mieux leur densité est un facteur qui peut être utilisé pour faciliter le positionnement des fils chauffants dans la zone concernées. Un découpage en compartiments ou îlots de couches de très petites dimensions est une garantie contre un positionnement insuffisamment précis. Il est cependant préférable d'opter pour un compromis entre un compartimentage très poussé, correspondant à un très grand nombre de lignes, et par suite à une surface sans couche plus importante d'une part, et d'autre part un réseau de lignes peu dense mais avec un risque de positionnement inadéquat des fils dans ce réseau conduisant à des courts circuits

Dans l'hypothèse limitant le plus petit possible la surface dépourvue de couches, les lignes peuvent découper la couche en rubans s'étendant pratiquement sous le fils conducteurs, chaque "ruban" ne supportant qu'un fil. Une telle disposition qui limite la surface qui doit être dépourvue du système de couches, nécessite cependant un positionnement précis des fils par rapport à ces lignes. Dans le cas où l'obtention d'une telle précision soulève des difficultés, il peut être préférable par précaution de former un ensemble de lignes sous forme d'un quadrillage plus ou moins serré, ce quadrillage étant tel qu'un fil reposant sur une partie (îlot) délimitée par plusieurs lignes ne supporte qu'un seul fil qui se trouve de fait isolé des parties voisines de la couche.

Dans ce mode de réalisation comme dans le précédent il reste préférable de limiter la surface dépourvue de couches à ce qui est nécessaire. Tout enlèvement superflu pouvant modifier de manière négative le comportement de la feuille de verre au cours de son bombage. Le réseau de ligne reste doc relativement peu dense et les îlots délimités par ces lignes ont une surface qui de préférence n'est pas inférieure à 50mm².

Les fils chauffants de la zone de repos des essuie-glaces sont avantageusement constitués de fils métalliques de petit diamètre. Même pour de faible diamètre la résistance par unité de longueur reste ordinairement relativement faible en comparaison de la résistance du système de couches conducteur et ce d'autant plus que le métal choisi est plus conducteur. En pratique on utilise avantageusement des fils de métaux très conducteurs, notamment des fils de cuivre, d'argent ou d'aluminium.

Le mode d'introduction dans le pare-brise feuilleté est relativement peu contraignant pour ce qui concerne le diamètre possibles des fils chauffants. Ces fils s'insèrent dans l'épaisseur de la feuille intercalaire thermoplastique qui assemble les deux feuilles de verre. Les épaisseurs traditionnelles de ces intercalaires, notamment celle de polyvinyl-butyral très largement utilisées pour les feuilletés, sont traditionnellement de 0,38 ou plus souvent de 0,76mm. Le diamètre des fils peut représenter une part important de l'épaisseur de l'intercalaire sans que l'insertion soulève des difficultés. Le diamètre des fils est de préférence au plus du tiers de l'épaisseur de l'intercalaire et avantageusement au plus du quart mais peut être bien inférieur.

Par ailleurs le choix de fils de section relativement importante permet pour une même résistance de disposer de fils plus longs. Ceci peut être avantageux dans la mesure où en fonction de la longueur il est possible d'accroître la distribution des fils sur une surface donnée. On sait que le verre n'est pas un bon conducteur thermique. Il est donc préférable pour avoir une bonne distribution de la température sur toute la zone de repos des essuie-glaces de disposer les fils chauffants suivant un réseau relativement dense. Autrement dit les boucles des fils doivent être relativement proches les unes des autres. L'accroissement de la section des fils et l'allongement que cet accroissement permet, favorise donc une meilleure répartition de la chaleur pour une résistance et une différence de potentiel données.

Les compromis avantageux selon l'invention, compte tenu des considérations précédentes sur la section des fils utilisés se trouvent en pratique dans les diamètres les plus avantageux. Ceux-ci sont de préférence compris entre d'au moins 20µ et de préférence d'au moins 50µ. Le diamètre doit encore rester en proportion de l'épaisseur de l'intercalaire dans lequel il s'insère. Pour cette raison le diamètre des fils est avantageusement au plus de 200µ, et de préférence au plus de 160µ.

Les fils métallique ne sont pas nécessairement de section circulaire. Des rubans peuvent aussi être utilisés dans la mesure où ces rubans, comme les fils, sont dans une partie du vitrage masquée à la vue de l'extérieur, leur discrétion n'est pas une condition impérative.

Etant destinés à s'insérer dans la feuille intercalaire thermoplastique, les fils, ou les rubans métalliques, sont de préférence fixés à la feuille intercalaire préalablement à l'assemblage du vitrage feuilleté. La fixation du fil suit les modalités développées antérieurement pour l'application des rubans métalliques entrant dans la constitution de certains « busards ». La technique de fixation usuelle est de chauffer suffisamment ces éléments conducteurs de telle sorte qu'au contact de la feuille thermoplastique, le matériau soit suffisamment ramolli pour laisse pénétrer le fil qui en refroidissant adhère à la feuille. Le chauffage du fil peut être obtenu par tout moyen et notamment par effet joule ou tout moyen équivalent.

Dans une alternative les fils peuvent aussi être constitués à partir d'une pâte conductrice du type de celles utilisées pour les fils chauffants des lunettes arrière. Dans ce cas leurs dimensions transversales sont nécessairement plus importantes. Des fils constitués à partir de pâtes à forte teneur en argent conduisent pour les plus étroites à des largeurs de l'ordre de 0,1 à 0,3mm. Des exemples de réalisations avantageux de ces formations par sérigraphie figurent notamment dans la demande WO2009/053469.

L'invention est décrite de manière détaillée en référence à la planche de dessins dans laquelle :
- la figure 1 représente en vue de face une feuille d'un pare-brise chauffant comportant deux moyens de chauffage ;
- la figure 2 est une représentation analogue à la figure 1 mettant en oeuvre des caractéristiques de l'invention ;
- la figure 3 représente de manière agrandie une disposition des moyens de chauffage de la zone de repos des essuie-glaces du type représenté à la figure 2 ;
- la figure 4 est une autre disposition selon l'invention analogue à celle de la figure 3,

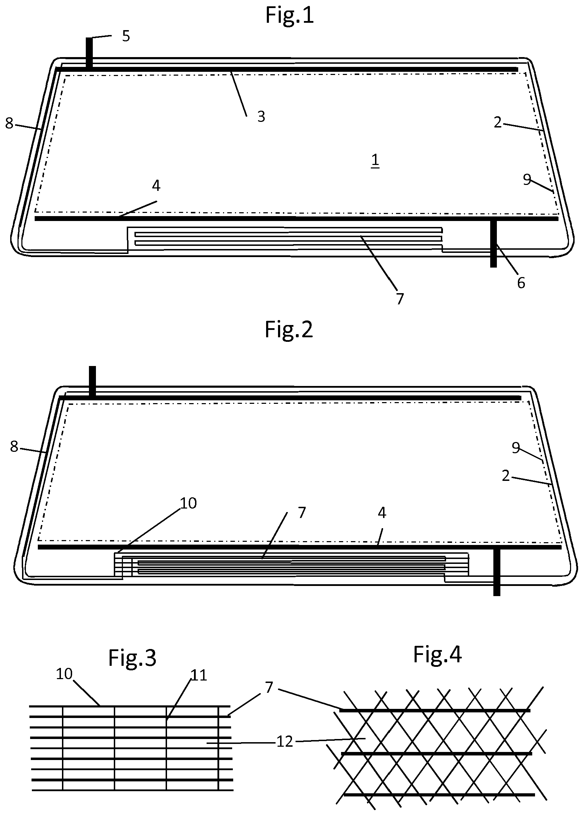

La feuille de verre 1 de pare-brise, vue de face de la figure 1, est de préférence est la feuille tournée vers l'intérieur de l'habitacle. Elle comporte un système de couches conducteur couvrant la quasi-totalité de la surface de la feuille. Le système de couches est sur la face de la feuille qui est en contact avec l'intercalaire thermoplastique entrant dans la composition du pare-brise feuilleté. Dans la dénomination habituelle il s'agit de la position 3 dans l'ordre des faces des feuilles compté à partir de l'extérieur.

Le système de couches revêtant la feuille 1 est matérialisé sur la figure 1 par ses limites 2. Ces limites sont situées ordinairement à quelques centimètres du bord de la feuille. Cette disposition a pour but de prévenir l'apparition de défauts liés au contact des couches avec l'atmosphère environnante. En particulier les pare-brise étant traditionnellement collés sur la carrosserie, le bord n'est en principe pas protégé contre l'humidité. La distance du bord assure aussi une isolation électrique contre les fuites qui pourraient affecter le système chauffant en contact direct avec la carrosserie métallique ou indirect par la présence d'eau sur les bords du vitrage.

La représentation du vitrage est limitée aux éléments nécessaires à la description de l'invention. Sur les pare-brise la couche peut aussi être interrompue à l'emplacement de divers dispositifs traditionnellement présents. C'est le cas par exemple de ce qui est désigné habituellement sous le nom de fenêtre de télétransmission, du type télépéage, ou les pour les caméras d'aide à la conduite notamment nocturne. Les fenêtres en question sont ménagées pour laisser pénétrer les ondes notamment infrarouges lesquelles ne franchissent pas, ou sont trop atténuées, par les couches conductrices entrant dans le système de couches chauffant.

D'autre zones du pare-brise peuvent aussi être débarrassées des couches, comme les emplacements de détecteurs de pluie lorsqu'ils fonctionnent également par rayonnement infrarouge. De façon générale les systèmes de couches chauffants faisant obstacle à une part substantielle de la transmission infrarouge, tout instrument nécessitant la transmission en question, la zone dans laquelle cet instrument opère est dépourvue du système de couches.

Pour alimenter le système de couches le pare-brise comporte des "busbars" 3, 4, constitués de conducteurs suffisamment peu résistant pour conserver le plus possible la puissance disponible pour les éléments directement utiles au chauffage du pare-brise. Ces busbars sont traditionnellement soit des rubans métalliques soit des rubans de pâtes émaillées conductrices.

Sur les figures 1 et 2, les busbars sont disposés sur les bords haut et bas de la feuille 1. Cette disposition est choisie de manière à limiter la distance qui les sépare afin de réduire la résistance entre ces busbars et accroître la puissance disponible par unité de surface pour une différence de potentielle disponible limitée.

Dans la représentation les busbars 3 et 4 sont eux-mêmes reliés par l'intermédiaire de connecteurs schématisés en 5 et 6, à l'alimentation électrique du véhicule non représentée.

Un fil conducteur chauffants 7 est disposé en partie basse sous le busbar 4. Le fil forme un ensemble de boucles couvrant la surface correspondant à l'aire de repos des essuie-glaces. La disposition des boucles et la résistance du fil chauffant 7 sont choisies pour assurer un chauffage à peu près homogène de cette aire de repos.

Avantageusement le fil chauffant 7 est alimenté à partir des busbars 3 et 4 ou directement à partir des connexions d'alimentations 5 et 6. Un conducteur représenté en 8 longe de la feuille 1 pour alimenter une extrémité du fil chauffant 7. Le fil 8 est situé dans la zone non revêtue par le système de couches.

A la figure 1, un seul fil chauffant 7 est représenté. Le même principe est applicable à des dispositions dans lesquelles deux fils ou plus sont disposés dans la zone de repos des essuie-glaces. En utilisant plusieurs fils, Il est possible de limiter la résistance de chacun pour une même longueur totale, et donc d'accroître la puissance disponible pour une tension donnée alimentant individuellement chaque fil.

Les pare-brise correspondant à la feuille 1 comportent ordinairement des parties émaillées destinées à masquer l'ensemble des busbars et des fils chauffants. Le système de couches chauffant et les fils étant en position 3, la composition émaillée de masquage est nécessairement située au-dessus de ces éléments. L'émail et les couches conductrices sont disposés chacun sur une des feuilles de verre. Le système de couches étant en position 3, la couche émaillée est en position 2, autrement dit de l'autre côté de la feuille intercalaire.

A titre indicatif, le trait mixte 9 illustre la limite de position de la bande émaillée de masquage située sur la feuille non représentée tournée vers l'extérieur du véhicule.

La figure 1 ne fait apparaître aucune disposition en ce qui concerne le système de couches en dehors de ce qu'il ne s'étend pas jusqu'au bord du vitrage. En particulier rien n'est montré en ce qui concerne le système de couches à l'emplacement du fil chauffant 7. Le mode selon l'invention reprend les dispositions et les éléments constitutifs de la feuille de verre de la figure 1 mais ajoute une série de lignes 10 correspondant à l'absence de couche conductrice, que celle-ci ait été empêchée lors de la formation des couches ou qu'une élimination ait été opérée sur la couche revêtant initialement uniformément la feuille sur la zone de repos des essuie-glaces. Ces lignes rompent la continuité électrique du système de couches et permettent d'isoler des parties de celui-ci.

Figure 2, les lignes 10 sont représentées s'étendent entre les boucles du fil 7, et entre le fil 7 et le busbar inférieur 4, de telle sorte que le courant doive nécessairement passer dans l'ensemble du fil et ne puisse donner lieu à un court-circuit, soit entre les boucles du fil 7 soit entre le fil 7 et le busbar 4.

Le fil 7 demeure au contact de la couche ou des parties de celle-ci délimitées par des lignes 10. Dans la représentation de la figure1 les lignes sans couches s'étendent tout au long des boucles du fil 7 de sorte que chaque boucle de fil s'étend sur une bande de couche ininterrompue imposant le passage du courant dans le fil meilleur conducteur que la bande de couche délimitée par les lignes d'isolation 10. Dans cette disposition, même si les bandes délimitées participent à la conduction, pour une part minime, celle-ci ne peut que contribuer au chauffage de la zone couverte.

En dehors des lignes 10 s'étendant plus ou moins parallèlement au fil 7, des lignes transversales 11 peuvent compartimenter la zone de repos en îlots 12 de dimensions limitées. Ces lignes 11 évitent également le passage du courant d'un îlot aux îlots contigus. Dans la représentation de la figure 3 on voit que chaque îlot ne doit supporter qu'un fil comme précédemment.

La disposition des fils par rapport aux lignes 10 de la figure 2, et aux lignes 10 et 11 de la figure 3, nécessite une précision qui n'est pas toujours commode à réaliser. Pour faciliter la mise en place il est possible de réduire sensiblement les dimension des mailles du réseau des lignes 10 et 11 pour garantir le fait qu'un îlot 12 ne soit traverser que par un fil 7, même si cela conduit à avoir des îlots vides de fil. Il est cependant préférable de ne pas trop réduire les dimensions des îlots pour ne pas multiplier les lignes dépourvues du système de couches, et par suite ne pas accroître la surface non revêtue.

Par ailleurs il n'est pas nécessaire de mettre en oeuvre des lignes essentiellement parallèles au fil 7. La figure 4 représente une disposition analogue à la précédente, dans laquelle les lignes sont effectivement non parallèles au fil, mais respectant la nécessité pour chaque îlot 12 de n'être traversé que par un fil.

Les représentations des figures 3 et 4 montrent chaque îlot 12 traversé par un fil. Selon les dimensions des mailles du réseau des îlots peuvent n'être traversés par aucun fil. Ceci correspond à un maillage plus serré des lignes qui n'a comme avantage que de ne pas nécessiter une bonne précision des positions relatives des fils et des lignes au détriment de l'augmentation de la surface dépourvue de couches.

Pour la mise en oeuvre des pare-brise chauffant le système de couche doit offrir une certaine puissance par unité de surface. Pour parvenir à ce résultat avec une alimentation dont la tension reste limitée il faut avoir un système de couche offrant la résistance la plus faible possible. Un tel système de couches est par exemple celui décrit dans la demande de brevet belge BE1019905 déposée le 12 avril 2011. Il s'agit d'un ensemble comprenant plusieurs couches minces d'argent avec des couches diélectriques qui protègent ces couches métalliques. Les systèmes de ce type permettent d'atteindre des résistances inférieures à 1Ω/□, et des puissances de plus de 400w/m² pour une distance entre les busbars de 0,75 m et une tension de l'ordre de 14v.

Les valeurs indiquées ci-dessus répondent aux demandes des constructeurs pour ce qui concerne le chauffage de la zone de vison du pare-brise. Avec cette puissance par unité de surface, la vitesse de dégivrage reste cependant encore insuffisante pour ce qui concerne la zone de repos des essuie-glaces.

Dans un exemple de réalisation selon l'invention on dispose deux fils chauffants en cuivre de diamètre 150µ de façon symétrique dans la zone de repos des essuie-glaces. Cette zone couvre une surface de 6 dm². Chaque fil présente une longueur de 5,5m. Les fils sont recourbés 7 fois dans des brins ou boucles sensiblement parallèles. La distance entre chaque brin est de 1,2cm environ. Cette distance est suffisamment faible pour que la zone chauffée ne présente pas de différence de température significative.

Le système de couches conducteur obtenu du type décrit dans la demande belge précitée, est quadrillé de lignes rompant la continuité électrique. Ces lignes résultent de l'utilisation d'un masque correspondant lors du dépôt des couches par pulvérisation cathodique. Les lignes ont une largeur de 0,35mm. Le quadrillage délimite des carrés de 5x10mm. La proportion de surface de couches correspondant à ces lignes ne dépasse pas 10% de la surface de repos des essuie-glaces. Dans les opérations de bombage des feuilles par les techniques traditionnelles, la présence des lignes n'entrainent pas de défaut perceptible par rapport au bombage obtenu dans des conditions semblables mais en l'absence de ces lignes.

La puissance délivrée par les fils chauffants est d'environ 8w/dm². Dans ces conditions pour un pare-brise constitué de deux feuilles de verre d'épaisseur totale de 4mm, et d'un intercalaire de PVB de 0,76mm d'épaisseur, l'augmentation de température du pare-brise dans la zone de repos des essuie-glaces (sans mouvement du véhicule qui entraînerait une forte convection) est d'environ 12°C après 4minutes de fonctionnement assurant pour les conditions climatique non-extrêmes un complet dégivrage de la zone de repos des essuie-glaces.

## Revendications

1. Pare-brise feuilleté chauffant constitué de deux feuilles de verre réunies par une feuille intercalaire thermoplastique, comprenant d'une part un système de couches conducteur couvrant l'essentiel de la surface d'une feuille de verre du pare-brise alimenté électriquement par des busbars (3, 4) disposées sur les bords haut et bas de la feuille de verre, et d'autre part un réseau de fils chauffants (7) formé d'un ensemble de boucles situé dans la zone de repos des essuie-glace **caractérisé en ce que** ledit réseau en contact avec le système de couches, non isolé électriquement de celui-ci, , les deux moyens de chauffage, système de couches et réseau de fils (7), étant situés du même côté de la feuille intercalaire (1), des lignes (10) rompant la continuité électrique localement du système de couches conducteur étant pratiquées à l'emplacement correspondant à la zone de repos des essuie-glaces, ces lignes (10) et le réseau de fils chauffant (7) étant disposés respectivement de telle sorte que le courant alimentant les fils chauffant passe sur toute la longueur de ceux-ci, en isolant électriquement les fils chauffants (7) du busbar disposé sur le bord bas de la feuille de verre (1), et des boucles des fils entre elles.

2. Pare-brise selon la revendication 1 dans lequel les deux moyens de chauffage sont situés dans le pare-brise en position 3.

3. Pare-brise selon l'une des revendications précédentes dans lequel les lignes (10) rompant la continuité électrique du système de couches ne représentent pas plus de 20% de la surface de la couche sur la zone correspondant à la présence du réseau de fils chauffants, et de préférence pas plus de 10%.

4. Pare-brise selon l'une des revendications précédentes dans lequel les lignes (10) rompant le système de couches, sont obtenues par application d'un masque sur la feuille de verre au cours de la formation du système de couches.

5. Pare-brise selon la revendication 4 dans lequel les lignes (10) rompant la continuité du système de couches, ont une largeur qui n'excède pas 0,5mm.

6. Pare-brise selon l'une des revendications précédentes dans lequel les lignes (10) rompant la continuité du système de couches, sont obtenues par ablation au moyen d'une source laser.

7. Pare-brise selon la revendication 6 dans lequel les lignes (10) ont une largeur qui n'excède pas 0,1mm.

8. Pare-brise selon l'une des revendications précédentes dans lequel, les lignes (10) rompant la continuité du système de couches sont disposées selon un quadrillage délimitant des îlots (12) dans ce système, chaque îlot (1) étant isolé électriquement des îlots voisins.

9. Pare-brise selon la revendication 8 dans lequel le quadrillage délimite des îlots (12) dont les dimensions ne sont pas inférieures à 50mm²,

10. Pare-brise selon l'une des revendications précédentes dans lequel les fils chauffants (7) sont des fils métalliques dont le diamètre n'est pas supérieur à 200µ.

11. Pare-brise selon la revendication 10 dans lequel les fils chauffants (7) sont logés dans la feuille intercalaire par fusion partielle du matériau thermoplastique de l'intercalaire.

12. Pare-brise selon l'une des revendications selon l'une des revendications 1 à 9, dans lequel les fils chauffant (7) sont obtenues par sérigraphie de pâte d'émail conductrice.

## Patentansprüche

1. Beheizte Verbundwindschutzscheibe, die aus zwei Glasscheiben gebildet ist, die durch eine thermoplastische Zwischenschichtfolie miteinander verbunden sind, umfassend einerseits ein leitendes Schichtsystem, das im Wesentlichen die gesamte Oberfläche einer Glasscheibe der Windschutzscheibe bedeckt, die durch Busbars (3, 4) mit elektrischem Strom versorgt wird, die an dem oberen und unteren Rand der Glasscheibe angeordnet sind, und andererseits ein Netz von Heizdrähten (7), das durch eine Anordnung von Schleifen gebildet ist, die in dem Ruhebereich der Scheibenwischer angeordnet ist, **dadurch gekennzeichnet, dass** das Netz in Kontakt mit dem Schichtsystem, das von diesem nicht elektrisch isoliert ist, wobei die zwei Heizmittel, Schichtsystem und Netz von Heizdrähten (7), auf der gleichen Seite der Zwischenschicht (1) angeordnet sind, wobei Leitungen (10), die die elektrische Kontinuität des leitenden Schichtsystems lokal unterbrechen, an der Stelle, die dem Ruhebereich der Scheibenwischer entspricht, vorgesehen sind, wobei diese Leitungen (10) und das Netz von Heizdrähten (7) jeweils derart angeordnet sind, dass der Strom, der die Heizdrähte speist, über die gesamte Länge von diesen fließt und dabei die Heizdrähte (7) der Busbar, die an dem unteren Rand der Glasscheibe (1) angeordnet ist, und der Schleifen der Drähte untereinander elektrisch isoliert.

2. Windschutzscheibe nach Anspruch 1, wobei die zwei Heizmittel in der Windschutzscheibe in Position 3 angeordnet sind.

3. Windschutzscheibe nach einem der vorhergehenden Ansprüche, wobei die Leitungen (10), die die elektrische Kontinuität des Schichtsystems unterbrechen, nicht mehr als 20 % der Oberfläche der Schicht auf dem Bereich, der der Anwesenheit des Netzes von Heizdrähten entspricht, und vorzugsweise nicht mehr als 10 %, darstellen.

4. Windschutzscheibe nach einem der vorhergehenden Ansprüche, wobei die Leitungen (10), die das Schichtsystem unterbrechen, durch Aufbringen von einer Maske auf der Glasscheibe während der Bildung des Schichtsystems erhalten werden.

5. Windschutzscheibe nach Anspruch 4, wobei die Leitungen (10), die die Kontinuität des Schichtsystems unterbrechen, eine Breite aufweisen, die nicht größer als 0,5 ist.

6. Windschutzscheibe nach einem der vorhergehenden Ansprüche, wobei die Leitungen (10), die die Kontinuität des Schichtsystems unterbrechen, durch Ablation mittels einer Laserquelle erhalten werden.

7. Windschutzscheibe nach Anspruch 6, wobei die Leitungen (10), eine Breite aufweisen, die nicht größer als 0,1 mm ist.

8. Windschutzscheibe nach einem der vorhergehenden Ansprüche, wobei die Leitungen (10), die die Kontinuität des Schichtsystems unterbrechen, nach einem Raster angeordnet sind, das kleine Inseln (12) in diesem System begrenzt, wobei jede kleine Insel (12) von den benachbarten kleinen Inseln elektrisch isoliert ist.

9. Windschutzscheibe nach Anspruch 8, wobei das Raster kleine Inseln (12) begrenzt, deren Abmessungen kleiner als 50 mm2 sind.

10. Windschutzscheibe nach einem der vorhergehenden Ansprüche, wobei die Heizdrähte (7) Metalldrähte sind, deren Durchmesser nicht größer als 200 µ ist.

11. Windschutzscheibe nach Anspruch 10, wobei die Heizdrähte (7) in der Zwischenschichtfolie durch teilweises Schmelzen des thermoplastischen Materials der Zwischenschicht untergebracht sind.

12. Windschutzscheibe nach einem der Ansprüche nach einem der Ansprüche 1 bis 9, wobei die Heizdrähte (7) durch Siebdrucken einer leitfähigen Emailpaste erhalten werden.

## Claims

1. Heated laminated windscreen formed of two glass sheets joined by a thermoplastic interlayer sheet, comprising on the one hand a conductive system of layers covering most of the surface of one glass sheet of the windscreen, which system is electrically powered by busbars (3, 4) positioned on the top and bottom edges of the glass sheet, and on the other hand a network of heating wires (7) formed of a set of loops located in the windscreen wiper park area, **characterized in that** said network in contact with the system of layers, not electrically insulated therefrom, the two heating means, system of layers and network of wires (7), being located on the same side of the interlayer sheet (1), lines (10) that locally break the electrical continuity of the conductive system of layers being applied at the location corresponding to the windscreen wiper park area, these lines (10) and the network of heating wires (7) being positioned respectively so that the current powering the heating wires passes over the entire length of these wires, while electrically insulating the heating wires (7) from the busbar located on the bottom edge of the glass sheet (1), and the loops of wires from one another.

2. Windscreen according to Claim 1, wherein the two heating means are located in the windscreen at position 3.

3. Windscreen according to either of the preceding claims, wherein the lines (10) that break the electrical continuity of the system of layers represent no more than 20% of the surface of the layer over the zone corresponding to the presence of the network of heating wires, and preferably no more than 10%.

4. Windscreen according to one of the preceding claims, wherein the lines (10) that break the system of layers are obtained by applying a mask to the glass sheet during the formation of the system of layers.

5. Windscreen according to Claim 4, wherein the lines (10) that break the continuity of the system of layers have a width which does not exceed 0.5 mm.

6. Windscreen according to one of the preceding claims, wherein the lines (10) that break the continuity of the system of layers are obtained by ablation using a laser source.

7. Windscreen according to Claim 6, wherein the lines (10) have a width that does not exceed 0.1 mm.

8. Windscreen according to one of the preceding claims, wherein the lines (10) that break the continuity of the system of layers are arranged in a grid pattern delimiting islands (12) in this system, each island (12) being electrically insulated from the adjacent islands.

9. Windscreen according to Claim 8, wherein the grid pattern delimits islands (12), the dimensions of which are no lower than 50 mm2.

10. Windscreen according to one of the preceding claims, wherein the heating wires (7) are metal wires, the diameter of which is no greater than 200 µ.

11. Windscreen according to Claim 10, wherein the heating wires (7) are embedded in the interlayer sheet by partial melting of the thermoplastic material of the interlayer.

12. Windscreen according to one of the claims according to one of Claims 1 to 9, wherein the heating wires (7) are obtained by screenprinting of conductive enamel paste.
